# EUROPEAN PATENT APPLICATION

(11) **EP 2 945 342 A1**
(43) Date of publication of application: **18.11.2015**
(21) Application number: 14305694.3
(22) Date of filing: 13.05.2014
(51) Int. Cl.: H04L 29/06, H04L 29/08

(54) **Method and device for transmitting media content**

(71) Applicant: ALCATEL LUCENT, 92100 Boulogne-Billancourt (FR)
(72) Inventor: Huysegems, Rafaël, 2018 Antwerpen (BE); De Vleeschauwer, Bart, 2018 Antwerpen (BE)
(74) Representative: ALU Antw Patent Attorneys

(57) **Abstract**

Embodiments relates to a leaf device (4) for transmitting media content to at least one client (5), comprising:
- an HTTP adaptive streaming module (41) for receiving successive HTTP requests from the client, wherein an HTTP request specifies a segment of a media content associated with a quality level, and sending the segments to the client,
- a client observation module (42) for determining a state of the client (5) in function of successive HTTP requests and, depending on the determined state:
- joining a multicast group associated with the media content and quality level of the segments requested in successive HTTP requests, thereby obtaining segments of said media content and said quality level from a root device (3) of the multicast group, or
- leaving said multicast group,
- an HTTP client module (43) for, in response to an HTTP request for a segment from the client (5), which is not stored in the leaf device, sending an HTTP request for said segment to the root device (3), thereby obtaining the requested segment from the root device.

## Description

### FIELD OF THE INVENTION

The present invention relates to the field of telecommunications. In particular, the present invention relates to methods and devices for transmitting media content.

### BACKGROUND

In HTTP Adaptive Streaming (HAS), a client adapts the video quality to optimally use the available bandwidth between the delivery point (server) and the client. This purpose is achieved using video chunks of 2 to 10 seconds, depending on the implementation. These chunks (also called segments) are coded in different qualities. Based on parameters such as perceived bandwidth for recently downloaded segments and the current buffer filling, the Rate Determination Algorithm (RDA) at the client decides what quality-version must be used for the download of the next segment.

Advantages of HAS include:
- The client can adapt the video quality to the available BW. Doing this, video stalls due to buffer-underrun can often be avoided.
- Because the video segments are transported using HTTP, HAS traverses trough firewalls without problems.
- The existing HTTP infrastructure for web-surfing such as HTTP-servers, HTTP-proxies and Content Delivery Networks (CDNs) can be reused to deliver HAS content.

Although HAS works nicely for a limited number of users, it puts a large load on the (access) network and the delivery point when thousands of users are watching the same live or linear content. In this case, each of the clients will request segments from the delivery point. The delivery-point has to deliver the same segments over and over again to thousands of users. Also, the network between the client and the delivery point has to transport the same segment again and again for each of the clients, resulting in a high network-load.

### SUMMARY

It is thus an object of embodiments of the present invention to propose methods and devices for transmitting media content, which do not show the inherent shortcomings of the prior art.

Accordingly, embodiments relate to a method for transmitting media content to at least one client, executed by a leaf device, comprising:
- Receiving successive HTTP requests from the client, wherein an HTTP request specifies a segment of a media content associated with a quality level,
- determining a state of the client in function of successive HTTP requests and, depending on the determined state:
- joining a multicast group associated with the media content and quality level of the segments requested in successive HTTP requests, thereby obtaining segments of said media content and said quality level from a root device of the multicast group, or
- leaving said multicast group,
- in response to an HTTP request for a segment from the client, which is not stored in the leaf device, sending an HTTP request for said segment to the root device, thereby obtaining the requested segment from the root device, and
- sending the segments to the client.

Correspondingly, embodiments relate to a leaf device for transmitting media content to at least one client, comprising:
- an HTTP adaptive streaming module for receiving successive HTTP requests from the client, wherein an HTTP request specifies a segment of a media content associated with a quality level, and sending the segments to the client.
- a client observation module for determining a state of the client in function of successive HTTP requests and, depending on the determined state:
- joining a multicast group associated with the media content and quality level of the segments requested in successive HTTP requests, thereby obtaining segments of said media content and said quality level from a root device of the multicast group, or
- leaving said multicast group,
- an HTTP client module for, in response to an HTTP request for a segment from the client, which is not stored by the leaf device, sending an HTTP request for said segment to the root device, thereby obtaining the requested segment from the root device.

The media content may be a live or linear video channel.

The method may comprise:
- joining a multicast group associated with manifest files of said media content, thereby regularly obtaining manifest files of the media content specifying newly available segments,
- in response to an HTTP request for said manifest file from said client, sending an HTTP response including the received manifest file to the client.

Determining a state of the client in function of successive HTTP requests may comprise:
- determining whether at least the N1 last HTTP requests relate to the same media content, wherein N1 is a predetermined threshold, and/or
- determining whether at least the N2 last HTTP requests relate to the same quality level, wherein N2 is a predetermined threshold, and/or
- determining whether the time between the two last HTTP requests is greater than a predetermined fraction of a mean time between HTTP requests, a nd/or
- determining whether the time between the two last HTTP requests is lower than a predetermined multiple of a mean time between HTTP requests.

Embodiments also relate to a method for transmitting media content to a leaf device, executed by a root device and comprising:
- obtaining, from a server, respective segments of a media content associated with a plurality of quality level,
- sending the segments of the media content associated with respective quality levels to respective multicast groups,
- in response to an HTTP request for a segment from the leaf device, sending an HTTP response including the requested segment to the leaf device.

Correspondingly, embodiments relate to a root device for transmitting media content to a leaf device, comprising:
- at least one HTTP adaptive streaming client module for obtaining respective segments of a media content associated with a plurality of quality levels,
- a multicast root module for sending the segments of the media content associated with respective quality levels to respective multicast groups,
- an HTTP server module for, in response to an HTTP request for a segment from the leaf device, sending an HTTP response including the requested segment to the leaf device.

The method may comprise:
- sending HTTP requests for a manifest file of the media content to the server, thereby obtaining the requested manifest file, and
- sending the obtained manifest file to a multicast group for manifest files.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a view of a system for transmitting media content from a server to clients,
Figure 2 is a functional view of a client, a leaf device, a root device and the server of Figure 1,
Figure 3 is a flowchart of part of a method for transmitting media content, executed by the leaf device of Figure 2, and
Figure 4 is a structural view of a root or leaf device.

### DESCRIPTION OF EMBODIMENTS

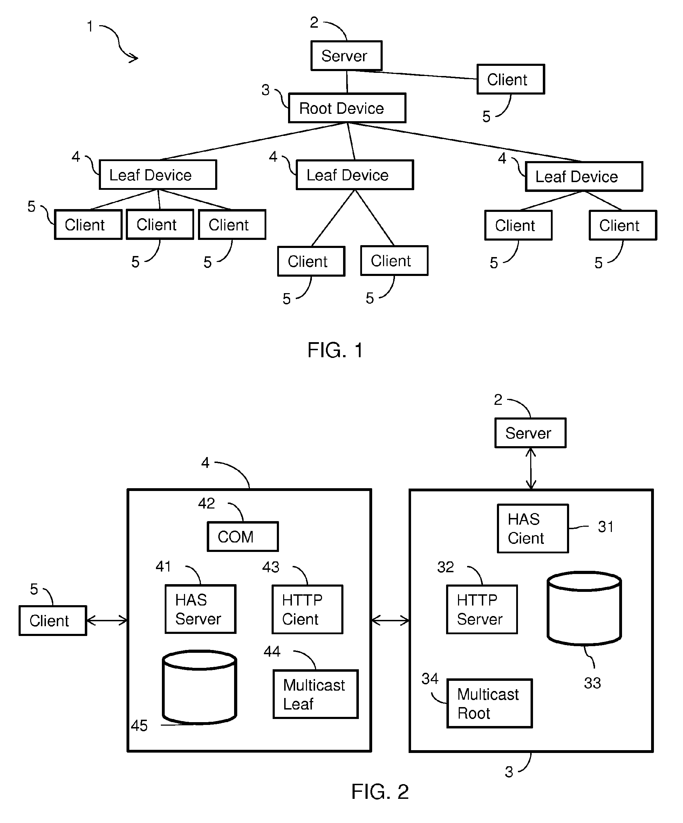

**Figure 1** shows a system 1 for transmitting media content from a server 2 to clients 5. The system 1 comprises the server 2, a plurality of clients 5, a root device 3 and a plurality of leaf devices 4, connected by a network (not shown).

The server 2 is a media server for sending media contents, typically video content, using HTTP adaptive streaming. Accordingly, a media content is divided in segments (also called chunks) and the segments are available in a plurality of quality levels, for example low quality, medium quality and high quality. A manifest file associated with the media content specifies the available segments and quality levels. Various formats may be used for the manifest file, for example the manifest file contains a list of the URLs of the available segments, or a template of the URL for the segments, which is adapted based on a counter or a time-based value. When the server 2 receives an HTTP request for a manifest file, it replies with an HTTP response including the requested manifest file. Also, when the server 2 receives an HTTP request for a segment, it replies with an HTTP response including the requested segment.

A media content from the server 2 may be a live or linear video channel, for example for a TV broadcast service. In that case, new segments are regularly added and the manifest file is updated accordingly. By requesting the updated manifest file regularly, a client 5 may learn the new available segments and request them. The system 1 is particularly useful for such live or linear content. However, the server 2 may also stored "static" video files (as opposed to live or linear content), for example for video on demand service. In that case, the manifest file does not change over time.

A client 5 is a user terminal configured for obtaining media contents using HTTP adaptive streaming and displaying the obtained media content. Accordingly, the client 5 sends an HTTP request for obtaining the manifest file of the media content. Then, the client 5 sends successive HTTP requests for obtaining segments of desired quality specified in the manifest file. A rate determination algorithm determines which quality should be requested, taking into account an estimate of the available bandwidth and the client buffer filing level. In case of live or linear content, the client 5 regularly requests the updated manifest file for learning the new available segments.

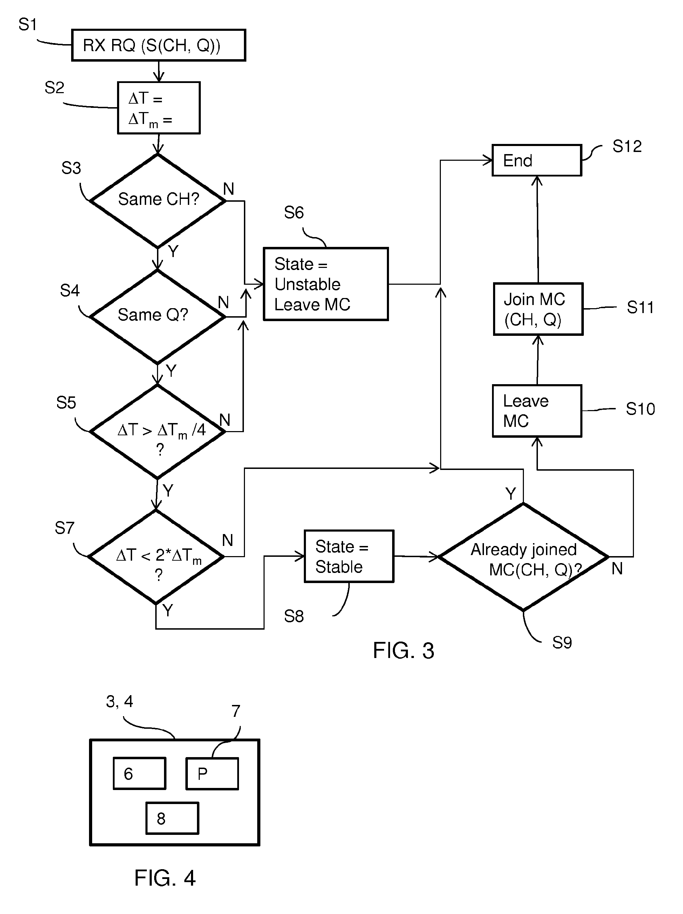

In the system 1, some clients 5 may request manifest files and segments by sending HTTP requests directly to the server 2. However, in the case of live or linear media content with a large audience (i.e. a large number of clients 5 requesting the same segments from the server 2), a given segment would be transmitted multiple times over the network to the respective clients 5, thereby significantly increasing the load on the server 2 and the network. Accordingly, in the system 1, the root device 3 and the leaf devices 4 are used as intermediary nodes between the server 2 and clients 5, and use multicast transmission when appropriate, thereby reducing the load on the server 2 and the network. The functioning of the root device 3 and the leaf devices 4 will be described in more detail with reference to Figures 2 and 3.

In a practical application, the server 2 may be the delivery node of a Content Distribution Network (CDN). The root device 3 may be part of the server 2, or an intermediary node between the server 2 and the leaf nodes 4. A leaf device 4 may be part of a Customer Premises Equipment (CPE, e.g. Home router) or an access node (for example IP-DSLAM).

**Figure 2** is a function view of a client 5, a leaf device 4, the root device 3 and the server 2. The functional modules shown on Figure 2 and described hereafter may correspond to execution of respective computer programs by the leaf device 4 and the root device 3. Also, the functions performed by the functional modules of the leaf device 4 and root device 3 correspond to steps of methods for transmitting media content executed by the leaf device 4 and root device 3, respectively.

The description of Figures 2 and 3 will relate to the transmission of a media content, which is a live or linear video channel, from the server 2 to clients 5, wherein the manifest file is regularly updated at the server 2 to specify the newly available segments. However, in another embodiment, the manifest file may specify a template for the URL of the segments. In that case, is not necessary to regularly request the updated manifest file.

The root device 3 comprises a HAS client module 31, an HTTP server module 32, a cache 33 and a multicast root module 34.

The HAS client module 31 acts as an HTTP adaptive streaming client for obtaining the segments and manifest files of the channel from the server 2. Accordingly, the HAS client module 31 regularly sends HTTP request to the server 2 for obtaining the updated manifest file and, when new segments are available, the HAS client module 31 sends HTTP requests to the server 2 for obtaining the segments. However, contrary to a client 5 which selects one quality level for each segment, the HAS client module 31 requests all available version of a segments, in other words all the available quality levels.

The cache 33 stores the manifest files and the segments obtained from the server 2. Given the live or linear nature of the channel, the segments stored in the cache 33 may be deleted after some delay. For example, the cache 33 may be managed on a First-In First-Out basis.

The multicast root module 34 creates one multicast group for each available quality level of the channel, and one multicast group for manifest files of the channel. When a new segment of a given quality level is received or starting to be received from the server 2, the HAS client module 31 triggers the multicast root module 34 to transmit this segment to the multicast group associated with the given quality level. When all the available segments are transmitted via the multicast systems, the root device 3 also triggers the multicast root module 34 to transmit the updated manifest file of the channel to the multicast group for manifest files.

A segment stored in the cache 33 may also be obtained by sending an HTTP request to the HTTP server module 32. In response to such a request, the HTTP server module 32 sends an HTTP response including the requested segment.

The leaf device 4 comprises a HAS server module 41, a client observation module 42, an HTTP client module 43, a multicast leaf module 44 and a cache 45.

The multicast leaf module 44 joins the multicast group for manifest files created by the root device 3. Accordingly, the leaf device 4 receives on a regular basis the updated manifest file, and stores it in the cache 45.

The HAS server module 41 receives HTTP requests for manifest files and segments from the clients 5.

When the HAS server module 41 receives an HTTP request for the manifest file of a media content (for example a video channel), it replies by sending the latest manifest file of this media content stored in the cache 45.

When the HAS server module 41 receives a request for a segment, it checks if the requested segment is available in the cache 45. When the segment is not available in the cache 45, the HTTP client module 43 sends an HTTP request for the segment to the root device 3 (more precisely the HTTP server module 32), thereby obtaining the requested segment, and stores the received segment in the cache 45. In that case, the leaf device 4 and the root device 3 act like HTTP proxies between the server 2 and the client 5. Then, the requested segment, whether already stored in the cache 45 or newly received from the root device 5 in response to the HTTP request, is retrieved from the cache 45 and sent to the client 5.

The client observation module 42 determines whether the client 5 is in a stable state or an unstable state in function of the successive HTTP requests from the client 5. More precisely, the state of the client 5 may be determined in function of:
- The media content requested in successive HTTP requests,
- The quality level requested in successive HTTP requests,
- The time interval between successive HTTP requests.

A stable state means that the client 5 requests subsequent segments from the same media content (the same channel) with the same quality level. In that case, one may assume that the client 5 will continue to request segments from the same media content (the same channel) with the same quality level. Accordingly, the client observation module 42 controls the multicast leaf module 44 to join the multicast group created by the root device 3, which correspond to the media content and quality level requested by the client 5. Consequently, the multicast leaf module 44 will receives the segments sent by the root device 3 in this multicast group, and store them in the cache 45. In case the multicast leaf module 44 had joined previously another multicast group for another media content and/or another quality level, the client observation module 42 controls the multicast leaf module 44 to leave this other multicast group, unless another client 5 connected to the leaf device 4 is in a stable state with respect to this other media content and other quality level.

An unstable state means that the client 5 is changing of media channel or quality level or quickly buffering segments. In that case, one may not predict which segment the client 5 will request next. Accordingly, the client observation module 42 controls the multicast leaf module 44 to leave the multicast group previously joined for the client 5 (if any), unless another client 5 connected to the leaf device 4 is in a stable state with respect to this media content and quality level.

An example method for determining the state of a client 5 is described in more detail with reference to Figure 3.

The above description relate to transmission of one single channel from the server 2 to client 5. In an embodiment, more than one channels are available from the server 2. In that case, the same processing may be applied in parallel for the other channels. For example, the root device 3 comprises a plurality of HAS client modules 31 associated with the respective channels, and the multicast root module 34 creates one multicast group for each available quality level of each channel.

In the system 1, the root device 5 obtains manifest files and segments of a media channel from the server 2 by sending HTTP requests. Accordingly, from the point of view of the server 2, the root device 5 acts like an HTTP adaptive streaming client. No special configuration of the server 2 is necessary. Similarly, a client 5 obtains manifest files and segments of a media channel from the leaf device 4 by sending HTTP requests. Accordingly, from the point of view of the client 5, the leaf device 4 acts like an HTTP adaptive streaming server. No special configuration of the client 5 is necessary.

The root device 5 requests the manifest files and segments of a given media channel only once, even if a plurality of clients 5 connected to the server 2 through a leaf device 4 and the root device 3 are watching this channel. Accordingly, the load on the server 2 and on the network between the server 2 and the root device 3 may be limited.

Also, when a plurality of clients 5 connected to the server 2 through leaf devices 4 and the root device 5 are watching the same channel, the client observation modules 42 of the respective leaf devices 4 determines if the clients 5 connected to it are in a stable state and, in the affirmative, the leaf device 4 joins the multicast group associated with the appropriate channel and quality level. Accordingly, segments are transmitted between the root device 3 and the leaf devices 4 by multicast, thereby also reducing the load on the network.

Finally, segments requested by a client 5 which have not been transmitted by multicast previously may be obtained by an HTTP request and response mechanism between the leaf device 4 and the root device 3.

Thus, the system 1 allows transmitting media content, for example a live or linear video channel, between the server 2 and clients 5. The root device 3 and the leaf devices 4 allow reducing the load on the server 2 and the network.

**Figure 3** is a flowchart of part of a method for transmitting media content, executed by the leaf node 4. More precisely, Figure 3 shows the steps executed by the client observation module 42.

The flowchart of Figure 3 starts when the client observation module 42 detects that the HAS server module 41 receives an HTTP request RQ from a client 5 (Step S1). The request RQ specifies a segment S associated with a channel CH and a quality level Q.

The client observation module 42 then determines the time ΔT between the request RQ and the previous request from the same client 5, and the mean time ΔTₘ between successive requests (Step S2). The mean time ΔTₘ may be determined for example as a moving average on the N0 last requests, with N0 > 2, for example N0 = 10.

Then, client observation module 42 determines whether the same channel CH has been requested for the N1 last successive requests of the same client 5 (Step S3), whether the same quality level Q has been requested for the N2 last successive requests (Step S4), and whether the time ΔT is greater than the mean time ΔTₘ divided by four for the N3 last successive requests (Step S5), with for example N1 = 10, N2 = 5 and N3 = 5.

In case of a negative response to any of the tests of steps S3 to S5, the client observation module 42 determines that the client 5 is in an unstable state (Step S6). Accordingly, the client observation module 42 controls the multicast leaf node 44 to leave the currently subscribed multicast group, if any (unless another client 5 connected to the leaf device 4 is in a stable state with respect to this media content and quality level).

In case of a positive response to each of the tests of steps S3 to S5, the client observation module 42 determines whether the time ΔT is lower than twice the mean time ΔTₘ for the N4 last successive requests of the client 5 (Step S7), with for example N4 = 5.

In the affirmative, the client observation module 42 determines that the client 5 is in a stable state with respect to the channel CH and quality level Q (Step S8), and checks whether the multicast leaf module 44 has already joined the multicast group associated with the channel CH and quality level Q (Step S9).

In the negative, the client observation module 42 controls the multicast leaf module 44 to leave the current subscribed multicast group, if any (Step S10), and to join the multicast group associated with the channel CH and quality level Q (Step S11).

The process of Figure 3 ends at Step S12 and is repeated for the successive HTTP requests from the client 5.

**Figure 4** is a structural view of a device, which may be the root device 3 or the leaf device 4. The device of Figure 4 comprises a processor 6, a memory 7 and a communication interface 8. The memory 7 comprises a computer program P which include instructions executable by the processor 6. The communication interface 8 allows communication with other devices on the network. The functional modules of Figure 2 and the associated steps and methods may correspond to the execution of the computer program P by the device of Figure 4.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmitting media content to at least one client (5), executed by a leaf device (4), comprising:
- Receiving (S1) successive HTTP requests (RQ) from the client (5), wherein an HTTP request (RQ) specifies a segment (S) of a media content (CH) associated with a quality level (Q),
- determining a state of the client (5) in function of successive HTTP requests (RQ) and, depending on the determined state:
- joining (S11) a multicast group (MC) associated with the media content (CH) and quality level (Q) of the segments requested in successive HTTP requests, thereby obtaining segments of said media content and said quality level from a root device (3) of the multicast group, or
- leaving (S6) said multicast group (MC),
- in response to an HTTP request for a segment from the client (5), which is not stored in the leaf device (4), sending an HTTP request for said segment to the root device (3), thereby obtaining the requested segment from the root device (3), and
- sending the segments to the client (5).

2. Method according to claim 1, wherein said media content is a live or linear video channel.

3. Method according to claim 2, comprising:
- joining a multicast group associated with manifest files of said media content, thereby regularly obtaining manifest files of the media content specifying newly available segments,
- in response to an HTTP request for said manifest file from said client (5), sending an HTTP response including the received manifest file to the client (5).

4. Method according to one of claims 1 to 3, wherein determining a state of the client in function of successive HTTP requests comprises determining (S3) whether at least the N1 last HTTP requests relate to the same media content, wherein N1 is a predetermined threshold.

5. Method according to one of claims 1 to 4, wherein determining a state of the client in function of successive HTTP requests comprises determining (S4) whether at least the N2 last HTTP requests relate to the same quality level, wherein N2 is a predetermined threshold.

6. Method according to one of claims 1 to 5, wherein determining a state of the client in function of successive HTTP requests comprises determining (S5) whether the time between the two last HTTP requests is greater than a predetermined fraction of a mean time between HTTP requests.

7. Method according to one of claims 1 to 6, wherein determining a state of the client in function of successive HTTP requests comprises determining (S7) whether the time between the two last HTTP requests is lower than a predetermined multiple of a mean time between HTTP requests.

8. Leaf device (4) for transmitting media content to at least one client (5), comprising:
- an HTTP adaptive streaming module (41) for receiving successive HTTP requests from the client, wherein an HTTP request (RQ) specifies a segment (S) of a media content (CH) associated with a quality level (Q), and sending the segments to the client (5),
- a client observation module (42) for determining a state of the client (5) in function of successive HTTP requests and, depending on the determined state:
- joining a multicast group associated with the media content and quality level of the segments requested in successive HTTP requests, thereby obtaining segments of said media content and said quality level from a root device (3) of the multicast group, or
- leaving said multicast group,
- an HTTP client module (43) for, in response to an HTTP request for a segment from the client (5), which is not stored in the leaf device, sending an HTTP request for said segment to the root device (3), thereby obtaining the requested segment from the root device.

9. Computer Program (P) comprising instructions executable by a processor (6) for performing the method for transmitting media content according to one of claims 1 to 7 when said instructions are executed by a computer.

10. Method for transmitting media content to a leaf device (4), executed by a root device (3) and comprising:
- obtaining, from a server (2), respective segments of a media content associated with a plurality of quality level,
- sending the segments of the media content associated with respective quality levels to respective multicast groups,
- in response to an HTTP request for a segment from the leaf device (4), sending an HTTP response including the requested segment to the leaf device (4).

11. Method according to claim 10, comprising:
- sending HTTP requests for manifest files of the media content to the server (2), thereby obtaining the requested manifest files, and
- sending the obtained manifest files to a multicast group for manifest files.

12. Root device (3) for transmitting media content to a leaf device (4), comprising:
- an HTTP adaptive streaming client module (31) for obtaining respective segments of a media content associated with a plurality of quality level,
- a multicast root module (34) for sending the segments of the media content associated with respective quality levels to respective multicast groups,
- an HTTP server module (32) for, in response to an HTTP request for a segment from the leaf device, sending an HTTP response including the requested segment to the leaf device.

13. Computer Program (P) comprising instructions executable by a processor (6) for performing the method for transmitting media content according to one of claims 10 and 11 when said instructions are executed by a computer.
